# NEUE EUROPÄISCHE PATENTSCHRIFT

(11) **EP 0 666 779 B2**
(45) Veröffentlichungstag und Bekanntmachung des Hinweises auf die Entscheidung über den Einspruch: **29.09.2004**
(45) Hinweis auf die Patenterteilung: 19.06.1996
(21) Anmeldenummer: 93924052.9
(22) Anmeldetag: 26.10.1993
(51) Int. Cl.: B05D 7/00, C09D 5/03

(54) **VERFAHREN ZUR HERSTELLUNG EINER MEHRSCHICHTIGEN LACKIERUNG**
PROCESS FOR PRODUCING A MULTILAYER COAT OF ENAMEL
PROCEDE DE REALISATION D'UN LAQUAGE MULTICOUCHE

(30) Priorität: 03.11.1992 DE 4237032
(43) Veröffentlichungstag der Anmeldung: 16.08.1995
(73) Patentinhaber: BASF Coatings Aktiengesellschaft, 48165 Münster (DE)
(72) Erfinder: RADEMACHER, Josef, Dr., D-48165 Münster (DE); REITER, Udo, Dr., D-48291 Telgte (DE)
(74) Vertreter: Fitzner, Uwe, Dr.
(86) Internationale Anmeldenummer: PCT/EP1993/002964
(87) Internationale Veröffentlichungsnummer: WO 1994/009915

(56) Entgegenhaltungen:
- EP-B- 0 045 040
- WO-A-92/00342
- DE-A- 4 032 391
- DE-A- 4 112 688
- GB-A- 2 012 191
- US-A- 4 057 607

## Beschreibung

Die Erfindung betrifft ein Verfahren zur Herstellung einer mehrschichtigen Lackierung auf einer Substratoberfläche, bei dem
(1) ein pigmentierter Basislack auf die Substratoberfläche aufgebracht wird
(2) aus dem in Stufe (1) aufgebrachten Lack ein Polymerfilm gebildet wird
(3) auf die so erhaltene Basisschicht ein Pulverklarlack aufgebracht wird und anschließend
(4) die Basisschicht zusammen mit der Pulverklarlackschicht eingebrannt wird,
geeignet sind.

Das oben beschriebene Verfahren ist bekannt. Es wird vor allem zur Herstellung von Automobildecklackierungen, insbesondere zur Herstellung von Metalleffektlackierungen eingesetzt (vgl. z.B. DE-A-38 14 853, US-A-3,953,644, EP-A-299 420 (insbesondere Seite 5, Zeile 22/23), US-A-4,402,983, EP-A-45 040 und GB-A-20 12 191).

Aus ökonomischen und ökologischen Gründen ist es wünschenswert, in Stufe (3) des oben beschriebenen sogenannten "basecoat/clearcoat"-Verfahrens Pulverklarlacke einzusetzen. Beim Einsatz von Pulverklarlakken werden Klarlackschichten erhalten, die insbesondere hinsichtlich Glanz und Verlauf verbesserungsbedürftig sind.

Die der vorliegenden Erfindung zugrundeliegende Aufgabenstellung besteht in der Bereitstellung eines Verfahrens der oben beschriebenen Art mit dem Lackierungen erhältlich sind, die gegenüber den Lackierungen des Standes der Technik verbessert sind. Die Lackierungen sollen insbesondere hinsichtlich Glanz und Verlauf der eingebrannten Klarlackschicht verbessert sein.

Diese Aufgabe wird überraschenderweise dadurch gelöst, daß in Stufe (3) des oben beschriebenen basecoat/clearcoat-Verfahrens ein Pulverklarlack eingesetzt wird, der eine Korngrößenverteilung aufweist, bei der
a) höchstens 15 Gew.-% der Pulverklarlackteilchen eine Korngröße aufweisen, die kleiner als 10 µm ist
b) für mindestens 40 Gew.-% der Pulverklarlackteilchen der Zehnerlogarithmus des Quotienten aus der größten und der kleinsten Korngröße kleiner oder gleich 0,25 ist und
c) mindestens 98 Gew.-% der Pulverklarlackteilchen eine Korngröße aufweisen, die kleiner als 100 µm ist.
wobei die mittlere Korngröße der in b) definierten Pulverklarlackteilchen d ± 0,2 d beträgt, wobei d für die mittlere Schichtdicke der mit dem Pulverklarlack herzustellenden eingebrannten Pulverklarlackschicht steht und die mittlere Korngröße mit einem Laserbeugungsspektrometer ermittelt wird, und anschließend (4) die Basisschicht zusammen mit der Pulverklarlackschicht eingebrannt wird.

In Stufe (1) des Verfahrens können im Prinzip alle zur Herstellung von mehrschichtigen Lackierungen geeigneten pigmentierten Basislacke eingesetzt werden. Derartige Basislacke sind dem Fachmann gut bekannt. Es können sowohl wasserverdünnbare Basislacke als auch Basislacke auf Basis von organischen Lösemitteln eingesetzt werden. Geeignete Basislacke werden beispielsweise beschrieben in der US-A-3,639,147, DE-A-33 33 072, DE-A-38 14 853, GB-A-2 012 191, US-A-3,953,644, EP-A-260 447, DE-A-39 03 804, EP-A-320 552, DE-A-36 28 124, US-A-4,719,132, EP-A-297 576, EP-A-69 936, EP-A-89 497, EP-A-195 931, EP-A-228 003, EP-A-38 127 und DE-A-28 18 100.

In Stufe (2) des Verfahrens werden dem in Stufe (1) applizierten Basislack in einer Abdunstphase die Lösemittel bzw. das Wasser entzogen.

Die in Stufe (3) durchgeführte Applikation des Pulverklarlackes erfolgt vorzugsweise elektrostatisch. Es können im Prinzip alle zur Herstellung von mehrschichtigen Lackierungen geeigneten Pulverklarlacke eingesetzt werden. Derartige Pulverklarlacke sind gut bekannt. Geeignete Pulverklarlacke werden beispielsweise beschrieben in der DE-A-38 14 853, GB-A-20 12 191, US-A-3,953,644, DE-A-23 03 650, EP-A-299 420, US-A-4,402,983 und EP-A-45 040.

Es ist erfindungswesentlich, daß der in Stufe (3) eingesetzte Pulverklarlack eine Korngrößenverteilung aufweist, bei der
a) höchstens 15 Gew.-%, vorzugsweise höchstens 10 Gew.-%, der Pulverklarlackteilchen eine Korngröße aufweisen, die kleiner als 10 µm ist
b) für mindestens 40 Gew.-%, vorzugsweise für mindestens 50 Gew.-%, besonders bevorzugt für mindestens 60 Gew.-% der Pulverklarlackteilchen der Zehnerlogarithmus des Quotienten aus der größten und der kleinsten Korngröße kleiner oder gleich 0,25, vorzugsweise kleiner oder gleich 0,20, besonders bevorzugt kleiner oder gleich 0,15 ist und
c) mindestens 98 Gew.-%, vorzugsweise mindestens 99 Gew.-% der Pulverklarlackteilchen eine Korngröße aufweisen, die kleiner als 100 µm ist.

Es ist vorgesehen, daß die mittlere Korngröße der unter b) genannten Pulverklarlackteilchen (das heißt der Pulverklarlackteilchen für die die Bedingung gilt, daß der Zehnerlogarithmus des Quotienten aus der größten und der kleinsten Korngröße kleiner oder gleich 0,25, vorzugsweise kleiner oder gleich 0,20, besonders bevorzugt kleiner oder gleich 0,15 ist) d ± 0,2 d, vorzugsweise d ± 0,1 d beträgt, wobei d für die mittlere Schichtdicke der mit dem Pulverklarlack herzustellenden eingebrannten Pulverklarlackschicht steht und die mittlere Korngröße mit einem Laserbeugungsspektrometer ermittelt wird.

Die Pulverklarlacke können mit Hilfe kommerziell erhältlicher Mahlanlagen, gegebenenfalls unter Zuhilfenahme von Siebmaschinen und/oder (Zyklon)-Sichtern auf die erfindungsgemäße Korngrößenverteilung eingestellt werden. Geeignete Maschinen sind dem Fachmann bekannt und kommerziell erhältlich beispielsweise bei: Alpine AG, Augsburg (BRD) und Hosokawa Micropul, Köln (BRD). Die Erfindung wird in den folgenden Beispielen näher erläutert. Alle Angaben über Teile und Prozentsätze sind Gewichtsangaben, falls nicht ausdrücklich etwas anderes festgestellt wird.

### 1. Herstellung eines Pulverklarlackes gemäß Stand der Technik

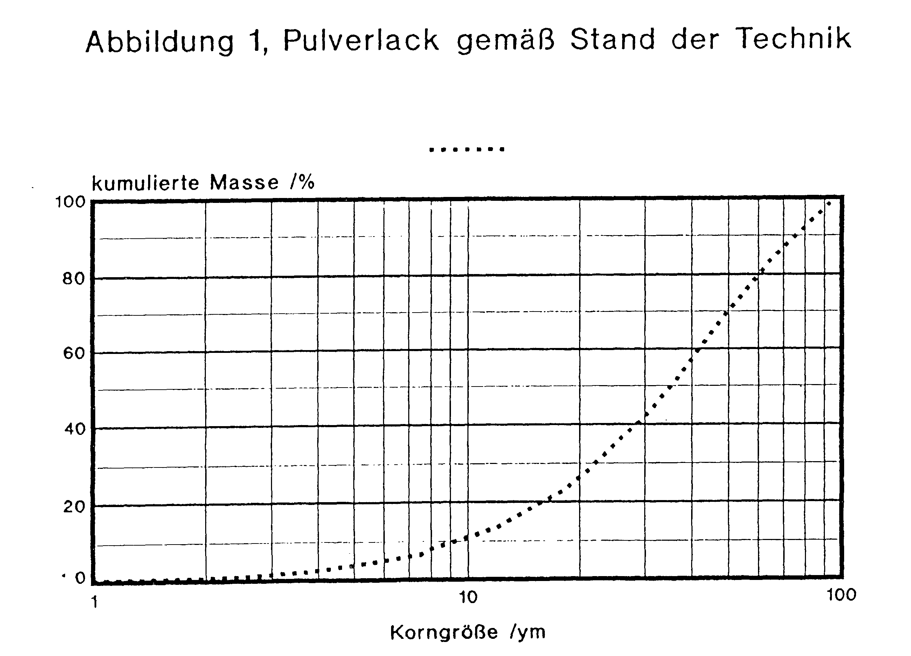

69,7 Gewichtsteile eines hydroxylgruppenhaltigen gesättigten Polyesters (Uralac^{R} P 2115; Hersteller: DSM Resins; Schmelzviskosität bei 165°C: 500 dPas; OH-Zahl: 40), 25,0 Gewichtsteile eines mit -Caprolactam blockierten Polyisocyanates auf Basis Isophorondiisocyanat (Vestagon^{R} B 1065; Hersteller: Hüls AG; NCO-Gehalt: 10,5 Gew.-%), 0,5 Gewichtsteile eines oligomeren Butylacrylates (Acronal 4F, Hersteller: BASF AG), 2,6 Gewichtsteile Tinuvin 900 (Ciba Geigy; UV Absorber), 1,4 Gewichtsteile Tinuvin 144 (Ciba Geigy; HALS) sowie als Entgasungsmittel 0,8 Gewichtsteile Benzoin werden gemischt und bei 110 bis 120°C in einem Extruder schmelzhomogenisiert. Das Extrudat wird schnell abgekühlt und wird derart zerkleinert, daß Chips mit einem Durchmesser von höchstens 3 cm erhalten werden. Diese Chips werden in einer Sichtermühle zu einem Pulver vermahlen. Die Korngrößenverteilung des so erhaltenen Pulverklarlackes ist in Abb. 1 dargestellt.

### 2. Herstellung eines Pulverklarlakkes

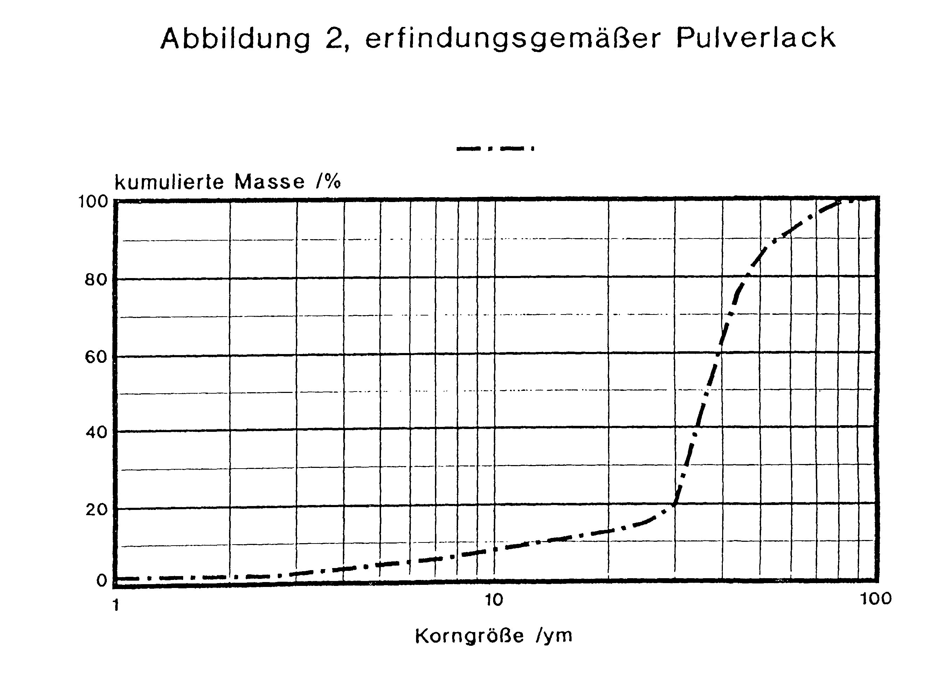

Es wird wie unter 1. beschrieben verfahren mit der einzigen Ausnahme, daß die Chips zu einem Pulverklarlack vermahlen werden, der eine Korngrößenverteilung gemäß Abb. 2 aufweist.

### 3. Herstellung von Metalleffektlackierungen

Auf mit einer handelsüblichen Elektrotauchlackierung und einem handelsüblichen Füller beschichtete phosphatierte Stahlbleche wird ein handelsüblicher, Polyurethan, Polyester und Melaminharz enthaltender wasserverdünnbarer, mit Aluminiumplättchen pigmentierter Basislack so appliziert, daß eine Trockenfilmdicke von 12 bis 15 µm erhalten wird. Der applizierte Basislack wird 10 Minuten bei Raumtemperatur und 10 Minuten bei 80°C getrocknet. Dann werden die gemäß Punkt 1. und 2. hergestellten Pulverklarlacke elektrostatisch so überlackiert, daß eine Filmdicke von 40 bis 50 µm erhalten wird. Schließlich werden Basislack und Pulverklarlack 20 Minuten bei 180°C (Objekttemperatur) eingebrannt. Die unter Verwendung des gemäß Punkt 2. hergestellten Pulverklarlackes hergestellte Metalleffektlackierung zeigt im Vergleich zu der unter Verwendung des gemäß Punkt 1. hergestellten Pulverklarlackes hergestellten Metalleffektlackierung einen deutlich besseren Verlauf. Bei der profilometrischen Vermessung der Klarlackoberflächen wird bei der mit dem Pulverklarlack gemäß Punkt 1 hergestellten Lackierung eine Rauhtiefe Rₐ von 0,36 µm mit der Standardabweichung von 0,14 µm gemessen während bei der mit dem erfindungsgemäßen Pulverklarlack gemäß Punkt 2 hergestellten Lackierung eine Rauhtiefe von nur 0,14 µm mit einer Standardabweichung von nur 0,01 µm gemesssen wird. Die mit dem Pulverklarlack erzielte verbesserte Oberflächenglätte ist auch visuell deutlich sichtbar.

## Patentansprüche

1. Verfahren zur Herstellung einer mehrschichtigen Lackierung auf einer Substratoberfläche, bei dem
(1) ein pigmentierter Basislack auf die Substratoberfläche aufgebracht wird,
(2) aus dem in Stufe (1) aufgebrachten Lack ein polymerfilm gebildet wird,
(3) auf die so erhaltene Basisschicht ein Pulverklarlack aufgebracht wird, welcher eine Korngrößenverteilung aufweist, bei der
a) höchstens 15 Gew.-% der Pulverklarlackteilchen eine Korngröße aufweisen, die kleiner als 10µm ist,
b) für mindestens 40 Gew.-% der Pulverklarlackteilchen der Zehnerlogarithmus des Quotienten aus der größten und der kleinsten Korngröße kleiner oder gleich 0,25 ist und
c) mindestens 98 Gew.-% der Pulverklarlackteilchen eine Korngröße aufweisen, die kleiner als 100µm ist,
wobei die mittlere Korngröße der in b) definierten Pulverklarlackteilchen d ± 0,2 d beträgt, wobei d für die mittlere Schichtdicke der mit dem Pulverklarlack herzustellenden eingebrannten Pulverklarlackschicht steht und die mittlere Korngröße mit einem Laserbeugungsspektrometer ermittelt wird, und anschließend
(4) die Basisschicht zusammen mit der Pulverklarlackschicht eingebrannt wird.

2. Verfahren nach Anspruch 1, wobei höchstens 10 Gew.-% der Pulverklarlackteilchen eine Korngröße aufweisen, die kleiner als 10 µm ist.

3. Verfahren nach Anspruch 1 oder 2, wobei für mindestens 50 Gew.-%, vorzugsweise mindestens 60 Gew.-% der Pulverklarlackteilchen der Zehnerlogarithmus des Quotienten aus der größten und der kleinsten Korngröße kleiner oder gleich 0,25 ist.

4. Verfahren nach einem der Ansprüche 1 bis 3, wobei für mindestens 40 Gew.-%, vorzugsweise mindestens 50 Gew.-%, besonders bevorzugt für mindestens 60 Gew.-% der Pulverklarlackteilchen der Zehnerlogarithmus des Quotienten aus der größten und der kleinsten Korngröße kleiner oder gleich 0,20, bevorzugt kleiner ode gleich 0,15 ist.

5. Verfahren nach einem der Ansprüche 1 bis 4, wobei mindestens 99 Gew.-% der Pulverklarlackteilchen eine Korngröße aufweisen, die kleiner als 100 µm ist.

6. Verfahren nach einem der Ansprüche 1 bis 5, wobei die mittlere Korngröße der in b) definierten Pulverklarlackteilchen d ± 0,1 d beträgt.

## Claims

1. Process for the production of a multicoat finish on a substrate surface, in which
(1) a pigmented basecoat is applied to the substrate surface,
(2) a polymer film is formed from the coating applied in step (1),
(3) a powder clearcoat is applied to the resulting basecoat, the said powder clearcoat having a particle size distribution in which
a) no more than 15% by weight of the powder clearcoat particles have a particle size smaller than 10 µm;
b) for at least 40% by weight of the powder clearcoat particles the common logarithm of the quotient of the largest and the smallest particle size is less than or equal to 0.25; and
c) at least 98% by weight of the powder clearcoat particles have a particle size smaller than 100 µm,
where the average particle size of the powder clearcoat particles defined in b) is d ± 0.2 d,
where d represents the average layer thickness of the stoved powder clearcoat layer to be prepared using the powder clearcoat, and the average particle size is determined using a laser diffraction spectrometer, and subsequently
(4) the basecoat is stoved together with the powder clearcoat.

2. Process according to Claim 1, where not more than 10% by weight of the powder clearcoat particles have a particle size smaller than 10 µm.

3. Process according to Claim 1 or 2, where, for at least 50% by weight, preferably for at least 60% by weight, of the powder clearcoat particles, the common logarithm of the quotients of the largest and the smallest particle size is less than or equal to 0.25.

4. Process according to one of Claims 1 to 3, where, for at least 40% by weight, preferably for at least 50% by weight and particularly preferably for at least 60% by weight of the powder clearcoat particles, the common logarithm of the quotient of the largest and the smallest particle size is less than or equal to 0.20, preferably less than or equal to 0.15.

5. Process according to one of Claims 1 to 4, where at least 99% by weight of the powder clearcoat particles have a particle size smaller than 100 µm.

6. Process according to one of Claims 1 to 5, where the average particle size of the powder clearcoat particles defined in d) is d ± 0.1 d.

## Revendications

1. Procédé de réalisation d'un laquage multicouche sur une surface de substrat, lors duquel
(1) on procède à l'application d'une laque de base pigmentée sur la surface du substrat,
(2) on forme, à partir de la laque appliquée dans l'étape (1), un film polymère,
(3) on procède à l'application, sur la couche de base ainsi obtenue, d'une laque transparente en poudre qui présente une distribution granulométrique, pour laquelle
a) au plus 15 % en poids des particules de laque transparente en poudre présentent une grandeur de particule, qui est inférieure à 10 microns,
b) pour au moins 40 % en poids des particules de laque transparente en poudre, le logarithme décimal du quotient de la grandeur de grain la plus grande et de la grandeur de grain la plus petite est inférieur ou égal à 0,25, et
c) au moins 98 % en poids des particules de laque transparente en poudre présentent une grandeur de particules, qui est inférieure à 100 microns,
où la granulométrie moyenne des particules de laque transparente en poudre définies en b) est de d ± 0,2 d,
où d représente l'épaisseur de couche moyenne de la couche de laque transparente en poudre cuite à préparer avec la laque transparente en poudre et la granulométrie moyenne est déterminée à l'aide d'un spectromètre de diffraction laser, et ensuite
(4) on soumet à cuisson la couche de base conjointement à la couche de laque transparente en poudre.

2. Procédé selon la revendication 1, dans lequel au moins 10 % en poids des particules de laque transparente en poudre présentent une grandeur de particules, qui est inférieure à 10 microns.

3. Procédé selon la revendication 1 ou 2, dans lequel, pour au moins 50 % en poids, de préférence pour au moins 60 % en poids des particules de laque transparente en poudre, le logarithme décimal du quotient de la grandeur de grain la plus grande et de la grandeur de grain la plus petite est inférieur ou égal à 0,25.

4. Procédé selon l'une quelconque des revendications 1 à 3, dans lequel, pour au moins 40 % en poids, de préférence pour au moins 50 % en poids, en particulier de préférence pour au moins 60 % en poids des particules de laque transparente en poudre, le logarithme décimal du quotient de la grandeur de grain la plus grande et de la grandeur de grain la plus petite est inférieur ou égal à 0,20, de préférence inférieur ou égal à 0,15.

5. Procédé selon l'une quelconque des revendications 1 à 4, dans lequel au moins 99 % en poids des particules de laque transparente en poudre présentent une grandeur de grain, qui est inférieure à 100 microns.

6. Procédé selon l'une quelconque des revendications 1 à 5, dans lequel la grandeur de grain moyenne des particules de laque transparente en poudre telle que définie sous d) est d ± 0,1 d.
